# EUROPEAN PATENT APPLICATION

(11) **EP 4 319 093 A1**
(43) Date of publication of application: **07.02.2024**
(21) Application number: 22790925.6
(22) Date of filing: 13.04.2022
(51) Int. Cl.: H04L 47/125, H04L 61/4511

(54) **METHOD AND APPARATUS FOR SELECTING EDGE APPLICATION SERVER**

(30) Priority: 23.04.2021 CN 202110463173
(71) Applicant: Huawei Technologies Co., Ltd., Longgang Shenzhen, Guangdong 518129 (CN)
(72) Inventor: ZHOU, Han, Shenzhen, Guangdong 518129 (CN)
(74) Representative: Maiwald GmbH
(86) International application number: PCT/CN2022/086550
(87) International publication number: WO 2022/222817

(57) **Abstract**

This application provides a method and an apparatus for selecting an edge application server. The method is performed by a domain name resolution server network element, and includes: obtaining load state information of a plurality of edge application servers; when domain name server DNS request information is received from a terminal device, determining a first edge application server of the terminal device based on the load state information of the plurality of edge application servers, where the plurality of edge application servers include the first edge application server; and sending DNS response information to the terminal device, where the DNS response information includes identification information of the first edge application server. Therefore, the domain name resolution server network element determines an appropriate edge application server for the terminal device based on the load state information and network addresses of the plurality of edge application servers.

## Description

This application claims priority to Chinese Patent Application No. 202110463173.7, filed with the China National Intellectual Property Administration on April 23, 2021 and entitled "METHOD AND APPARATUS FOR SELECTING EDGE APPLICATION SERVER", which is incorporated herein by reference in its entirety.

### TECHNICAL FIELD

This application relates to the field of edge computing, and in particular, to a method and an apparatus for selecting an edge application server.

### BACKGROUND

Mobile edge computing (mobile edge computing, MEC), also referred to as multi-access edge computing (multi-access edge computing, MEC), is a technology in which data processing and data computing are moved down to a network edge side to implement fast computing at the network edge side, so that a rapid service response is made for an application. The MEC provides a cloud computing function and an information technology (information technology, IT) service environment at a network edge for an application developer and a content provider. A plurality of edge application servers of a service are separately deployed on a plurality of MEC platforms in a distributed manner, for example, deployed in an edge network. Each edge application server of the service provides a service for user equipment (user equipment, UE) in a specific range.

A domain name resolution server (local DNS Resolve, LDNSR) network element is configured to process a domain name system (domain name system, DNS) message sent by UE. After the LDNSR network element receives the DNS message of the UE, the LDNSR requests location information of the LTE from a session management function (session management function, SMF) network element. The LDNSR places the location information of the LTE in an edge network configuration server (edge data network configuration server, ECS) field in a DNS request message. A DNS server selects, for the UE based on the ECS field, an application server closer to a location of the UE. However, only a delay factor is considered in this manner. The DNS server is unaware of information such as a load state of the application server, and cannot select a more appropriate edge application server for the UE.

### SUMMARY

This application provides a method for selecting an edge application server, so that a domain name resolution server network element determines an appropriate edge application server for a terminal device based on load state information and network addresses of a plurality of edge application servers.

According to a first aspect, a method for selecting an edge application server is provided. The method is performed by a domain name resolution server network element, and includes: obtaining load state information of a plurality of edge application servers; when domain name server DNS request information is received from a terminal device, determining a first edge application server of the terminal device based on the load state information of the plurality of edge application servers, where the plurality of edge application servers include the first edge application server; and sending DNS response information to the terminal device, where the DNS response information includes identification information of the first edge application server.

Based on the foregoing technical solution, the domain name resolution server network element obtains the load state information of the plurality of edge application servers, and selects an appropriate edge application server for the terminal device based on the load state information of the plurality of edge application servers. In the conventional technology, only a delay factor is considered, and only a close edge application server is selected for a terminal device. Therefore, a possibility that the selected edge application server is already in an overloaded state is ignored. According to the technical solution of this application, the domain name resolution server network element can consider a load state information factor when selecting an edge application server for the terminal, to overcome a disadvantage of the conventional technology, and select a more appropriate edge application server for the terminal.

With reference to the first aspect, in some implementations of the first aspect, the obtaining load state information of a plurality of edge application servers includes: sending first request information to a network data analytics function network element, where the first request information is used to obtain the load state information of the plurality of edge application servers, and receiving the load state information of the plurality of edge application servers from the network data analytics function network element. In the foregoing technical solution, a load state factor can be considered when the edge application server is selected for the terminal device, to select the appropriate edge application server.

With reference to the first aspect, in some implementations of the first aspect, the obtaining load state information of a plurality of edge application servers includes: receiving the load state information of the plurality of edge application servers from an edge service function network element. In the foregoing technical solution, a load state factor can be considered when the edge application server is selected for the terminal device, to select the appropriate edge application server.

With reference to the first aspect, in some implementations of the first aspect, data network access identifier DNAI information of the plurality of edge application servers is obtained; and the determining a first edge application server of the terminal device based on the load state information of the plurality of edge application servers further includes: determining the first edge application server based on the load state information of the plurality of edge application servers and the DNAI information of the plurality of edge application servers. In the foregoing technical solution, both a delay factor and the load state factor can be considered when the edge application server is selected for the terminal device, to select the more appropriate edge application server.

With reference to the first aspect or some implementations of the first aspect, in some other possible implementations of the first aspect, that data network access identifier DNAI information of the plurality of edge application servers is obtained includes: the DNAI information of the plurality of edge application servers is received from an edge service function network element. In the foregoing technical solution, both the delay factor and the load state factor can be considered when the edge application server is selected for the terminal device, to select the more appropriate edge application server.

With reference to the first aspect or some implementations of the first aspect, in some other possible implementations of the first aspect, subscription request information is sent, where the subscription request information is used to subscribe to online events of the plurality of edge application servers, and the subscription request information carries identification information of the plurality of edge application servers.

According to a second aspect, a method for selecting an edge application server is provided. The method is performed by a network data analytics function network element, and includes: receiving first request information from a domain name resolution server network element, where the first request information is used to request load state information of a plurality of edge application servers; obtaining the load state information of the plurality of edge application servers; and sending the load state information of the plurality of edge application servers to the domain name resolution server network element.

According to a third aspect, a method for selecting an edge application server is provided. The method is performed by an edge network configuration server network element, and includes: obtaining load state information of a plurality of edge application servers; and sending the load state information of the plurality of edge application servers.

With reference to the third aspect, in some implementations of the third aspect, the method further includes: receiving a subscription request message, where the subscription request message is used to obtain data network access identifier DNAI information of the plurality of edge application servers. In the foregoing technical solution, both a delay factor and a load state factor can be considered when an edge application server is selected for a terminal device, to select a more appropriate edge application server.

With reference to the third aspect or some implementations of the third aspect, in some other possible implementations of the third aspect, the method includes: sending the DNAI information of the plurality of edge application servers. In the foregoing technical solution, both the delay factor and the load state factor can be considered when the edge application server is selected for the terminal device, to select the more appropriate edge application server.

With reference to the third aspect or some implementations of the third aspect, in some other possible implementations of the third aspect, the method further includes: receiving subscription request information, where the subscription request information is used to subscribe to online events of the plurality of edge application servers, where the subscription request information carries identification information of the plurality of edge application servers. In the foregoing technical solution, both the delay factor and the load state factor can be considered when the edge application server is selected for the terminal device, to select the more appropriate edge application server.

According to a fourth aspect, a method for selecting an edge application server is provided. The method is performed by an edge enabler server network element, and includes: obtaining load state information of a plurality of edge application servers; and sending the load state information of the plurality of edge application servers. In the foregoing technical solution, a load state factor can be considered when an edge application server is selected for a terminal device, to select an appropriate edge application server.

With reference to the fourth aspect, in some implementations of the fourth aspect, the method includes: receiving first request information, where the first request information is used to request the load state information of the plurality of edge application servers. In the foregoing technical solution, the load state factor can be considered when the edge application server is selected for the terminal device, to select the appropriate edge application server.

According to a fifth aspect, a domain name resolution server network element is provided. The domain name resolution server network element includes: an obtaining module, configured to obtain load state information of a plurality of edge application servers; a determining module, configured to: when domain name server DNS request information is received from a terminal device, determine a first edge application server of the terminal device based on the load state information of the plurality of edge application servers, where the plurality of edge application servers include the first edge application server; and a sending module, configured to send DNS response information to the terminal device, where the DNS response information includes identification information of the first edge application server.

With reference to the fifth aspect, in some implementations of the fifth aspect, the obtaining module is specifically configured to: send first request information to a network data analytics function network element, where the first request information is used to obtain the load state information of the plurality of edge application servers; and receive the load state information of the plurality of edge application servers from the network data analytics function network element.

With reference to the fifth aspect or some implementations of the fifth aspect, in some other possible implementations of the fifth aspect, the obtaining module is specifically configured to receive the load state information of the plurality of edge application servers from an edge service function network element.

With reference to the fifth aspect or some implementations of the fifth aspect, in some other possible implementations of the fifth aspect, data network access identifier DNAI information of the plurality of edge application servers is obtained; and the determining module is further configured to determine the first edge application server based on the load state information of the plurality of edge application servers and the DNAI information of the plurality of edge application servers.

With reference to the fifth aspect or some implementations of the fifth aspect, in some other possible implementations of the fifth aspect, the obtaining module is specifically configured to receive the DNAI information of the plurality of edge application servers from an edge service function network element.

With reference to the fifth aspect or some implementations of the fifth aspect, in some other possible implementations of the fifth aspect, the sending module is further configured to send subscription request information, where the subscription request information is used to subscribe to online events of the plurality of edge application servers, and the subscription request information carries identification information of the plurality of edge application servers.

According to a sixth aspect, a network data analytics function network element is provided. The network data analytics function network element includes: a receiving module, configured to receive first request information from a domain name resolution server network element, where the first request information is used to request load state information of a plurality of edge application servers; an obtaining module, configured to obtain the load state information of the plurality of edge application servers; and a sending module, configured to send the load state information of the plurality of edge application servers to the domain name resolution server network element.

According to a seventh aspect, an edge network configuration server network element is provided. The edge network configuration server network element includes: an obtaining module, configured to obtain load state information of a plurality of edge application servers; and a sending module, configured to send the load state information of the plurality of edge application servers.

With reference to the seventh aspect, in some implementations of the seventh aspect, the edge network configuration server network element further includes: a receiving module, configured to receive a subscription request message, where the subscription request message is used to obtain data network access identifier DNAI information of the plurality of edge application servers.

With reference to the seventh aspect or some implementations of the seventh aspect, in some other possible implementations of the seventh aspect, the sending module is configured to send the DNAI information of the plurality of edge application servers.

With reference to the seventh aspect or some implementations of the seventh aspect, in some other possible implementations of the seventh aspect, the receiving module is further configured to receive subscription request information, where the subscription request information is used to subscribe to online events of the plurality of edge application servers, and the subscription request information carries identification information of the plurality of edge application servers.

According to an eighth aspect, an edge enabler server network element is provided. The edge enabler server network element includes: an obtaining module, configured to obtain load state information of a plurality of edge application servers; and a sending module, configured to send the load state information of the plurality of edge application servers.

With reference to the eighth aspect, in some implementations of the eighth aspect, the edge enabler server network element includes: a receiving module, configured to receive first request information, where the first request information is used to request the load state information of the plurality of edge application servers.

According to a ninth aspect, an apparatus for selecting an edge application server is provided. The apparatus includes a domain name resolution server network element, a network data analytics function network element, an edge network configuration server network element, and an edge enabler server network element. The domain name resolution server network element is configured to perform the method according to the first aspect. Alternatively, the network data analytics function network element is configured to perform the method according to the second aspect. Alternatively, the edge network configuration server network element is configured to perform the method according to the third aspect. Alternatively, the edge enabler server network element is configured to perform the method according to the fourth aspect.

According to a tenth aspect, a computer-readable storage medium is provided. The computer storage medium stores program instructions. When the instructions are executed, a domain name resolution server network element is enabled to perform the method according to the first aspect. Alternatively, when the instructions are executed, a network data analytics function network element is enabled to perform the method according to the second aspect. Alternatively, when the instructions are executed, an edge network configuration server is enabled to perform the method according to the third aspect. Alternatively, when the instructions are executed, an edge enabler server network element is enabled to perform the method according to the fourth aspect.

According to an eleventh aspect, a chip system is provided. The chip system includes at least one processor. The at least one processor is configured to execute stored instructions, to enable a domain name resolution server network element to perform the method according to the first aspect. Alternatively, the at least one processor is configured to execute stored instructions, to enable a network data analytics function network element to perform the method according to the second aspect. Alternatively, the at least one processor is configured to execute stored instructions, to enable an edge network configuration server network element to perform the method according to the third aspect. Alternatively, the at least one processor is configured to execute stored instructions, to enable an edge enabler server network element to perform the method according to the fourth aspect.

According to a twelfth aspect, a system is provided. The system includes: the domain name resolution server network element according to the fifth aspect, and/or the network data analytics function network element according to the sixth aspect, and/or the edge network configuration server network element according to the seventh aspect, and/or the edge enabler server network element according to the eighth aspect.

### BRIEF DESCRIPTION OF DRAWINGS

FIG. 1 is a schematic architectural diagram of a network system according to an embodiment of this application;
FIG. 2 is a schematic diagram of an application scenario according to an embodiment of this application;
FIG. 3 is a schematic diagram of a method for selecting an edge application server according to this application;
FIG. 4 is a schematic diagram of a method for selecting an edge application server according to an embodiment of this application;
FIG. 5 is a schematic diagram of a method for selecting an edge application server according to another embodiment of this application;
FIG. 6 is a schematic diagram of a method for selecting an edge application server according to another embodiment of this application;
FIG. 7 is a schematic block diagram of an apparatus according to an embodiment of this application;
FIG. 8 is another schematic diagram of an apparatus according to an embodiment of this application;
FIG. 9 is another schematic diagram of an apparatus according to an embodiment of this application;
FIG. 10 is another schematic diagram of an apparatus according to an embodiment of this application; and
FIG. 11 is a schematic structural diagram of an apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a 5th generation (5th generation, 5G) system or a new radio (new radio, NR) system, and other future communication systems.

A terminal device in embodiments of this application may be user equipment, an access terminal, a user unit, a user station, a mobile station, a remote station, a remote terminal, a mobile device, a user terminal, a terminal, a wireless communication device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a future 5G network, or a terminal device in a future evolved public land mobile network (public land mobile network, PLMN), and the like. This is not limited in embodiments of this application.

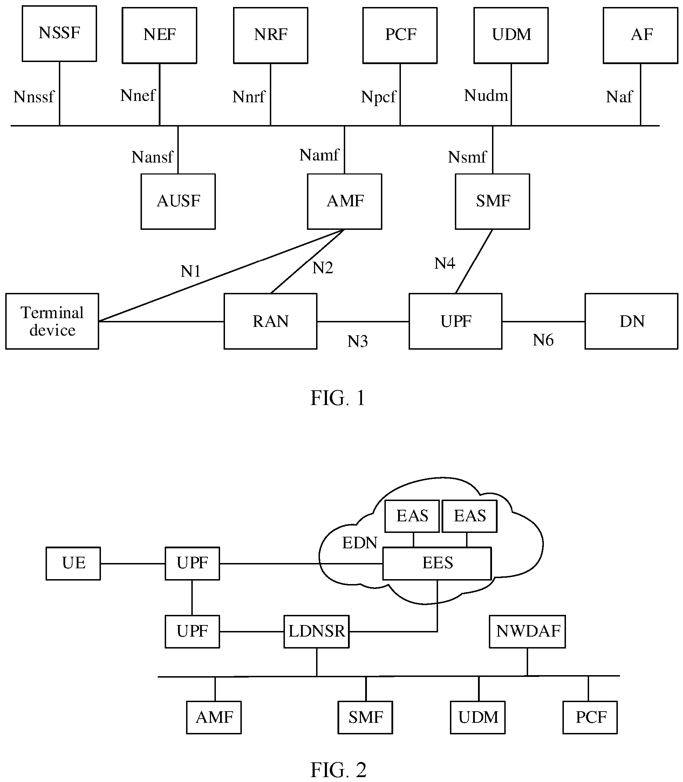

FIG. 1 is a schematic block diagram of an example of a wireless communication system architecture to which this application is applicable. As shown in FIG. 1, the system architecture includes a terminal device, a radio access network (radio access network, RAN) device, a core network device, and a data network (data network, DN). The system architecture uses a service-based (service-based) interface. The terminal device in FIG. 1 may be configured to connect, through a wireless air interface, to the radio access network device deployed by an operator, and then connect to the data network via the core network device. The radio access network device is mainly configured to implement functions such as a wireless physical layer function, resource scheduling and radio resource management, radio access control, and mobility management. The core network device (where the core network device may also be referred to as a management device) is mainly used for device registration, security authentication, mobility management, location management, and the like of the terminal device. It should be noted that, FIG. 1 is merely an example architectural diagram. In addition to functional units shown in FIG. 1, the network architecture may further include other functional units or functional network elements. This is not limited in embodiments of this application. FIG. 1 is based on a 5G system architecture, or may be based on other system architectures, for example, an LTE system. This is not limited in embodiments of this application.

The terminal device shown in FIG. 1 may be any one of the foregoing possible terminal devices, for example, may be: a mobile phone, a computer, a cellular phone, a cordless phone, a session initiation protocol (session initiation protocol, SIP) phone, a smartphone, a wireless local loop (wireless local loop, WLL) station, a personal digital assistant (personal digital assistant, PDA), a computer, a laptop computer, a handheld communication device, a handheld computing device, a satellite wireless device, a wireless modem card, a set top box (set top box, STB), customer premises equipment (customer premises equipment, CPE), and/or other devices for communicating over a wireless system. The foregoing radio access network device may be an access network (access network, AN)/radio access network (radio access network, RAN) device, or a network including a plurality of 5G-AN/5G-RAN nodes. The 5G-AN/5G-RAN node may be: an access point (access point, AP), a next generation base station (NR NodeB, gNB), a gNB in a form in which a central unit (central unit, CU) and a distributed unit (distributed unit, DU) are separated, a transmission reception point (transmission reception point, TRP), a transmission point (transmission point, TP), or some other access nodes.

As shown in FIG. 1, the core network device may include: a unified data management (unified data management, UDM) network element, an access and mobility management function (access and mobility management function, AMF) network element, a session management function (session management function, SMF) network element, a policy control function (policy control function, PCF) network element, an application function (application function, AF) network element, a user plane function (user plane function, UPF) network element, a network exposure function (network exposure function, NEF) network element, a network repository function (network repository function, NRF) network element, a network slice selection function (network slice selection function, NSSF) network element, an authentication server function (authentication server function, AUSF) network element, and the like. These functional units can work independently or can be combined to implement some control functions. For example, the AMF, the SMF, and the PCF may be combined as a management device, and are configured to complete access control and mobility management functions such as access authentication, security encryption, and location registration of the terminal device, and session management functions such as establishment, release, and a change of a user plane transmission path, and a function of analyzing some slice (slice) related data (for example, congestion) and terminal device related data.

In a 5G network shown in FIG. 1, a connection may be established between functional units through a next generation (next generation, NG) network interface to implement communication. For example, the terminal device establishes an air interface connection to the RAN device through an NR interface to transmit user plane data and control plane signaling; the terminal device may establish a control plane signaling connection to the AMF through an NG interface 1 (N1 for short); the RAN device may establish a user plane data connection to a traffic steering UPF through an NG interface 3 (N3 for short); the RAN device may establish a control plane signaling connection to the AMF through an NG interface 2 (N2 for short); and the UPF may exchange user plane data with the data network through an NG interface 6 (N6 for short). Each core network element may communicate with other core network elements through corresponding interfaces. For example, another core network element may communicate with the NSSF through an Nnssf interface, and another core network element may communicate with the NEF through an Nnef interface.

It should be noted that, the part shown in FIG. 1 is merely an example architectural diagram. In addition to the functional units shown in the part shown in FIG. 1, the network architecture may further include other functional units or functional network elements. This is not limited in embodiments of this application.

It should be understood that a name of an interface between network elements in this application is merely an example, and the interface between the network elements may alternatively have another name. The name of the interface is not limited in embodiments of this application.

It should be further understood that the radio access network device in embodiments of this application may be a device configured to communicate with a terminal apparatus and the core network device, and the radio access network device may be an evolved NodeB (evolved NodeB, eNB, or eNodeB) in the LTE system, or may be a radio controller in a cloud radio access network (cloud radio access network, CRAN) scenario. Alternatively, the access network device may be a relay station, an access point, a vehicle-mounted device, a wearable device, a network device in the 5G network, an access network device in a future evolved PLMN network, or the like. This is not limited in embodiments of this application.

FIG. 2 is a schematic diagram of a system architecture or a scenario to which embodiments of this application is applied. As shown in FIG. 2, the system architecture includes a terminal device UE, core network elements (a UPF, an AMF, an SMF, a unified data management (unified data management, UDM), and a PCF), a domain name resolution server (local DNS Resolve, LDNSR), a network data analytics function (network data analytics function, NWDAF), an edge enabler server (edge enabler server, EES), and an edge application server (edge application server, EAS). The edge enabler server EES and the edge application server EAS are included in an edge data network (edge data network, EDN).

Edge data network EDN:
A general understanding is that the EDN corresponds to a data network, is a special local data network (local DN), includes an edge enabling function, and may be identified by using a data network access identifier (DN access identifier, DNAI) and a data network name (data network name, DNN). This is a network logic concept. Another understanding of the EDN is that the EDN is an equivalent concept of central cloud, may be understood as a local data center (that is, a geographical location concept), may be identified by using a data network access identifier (data network access identifier, DNAI), and may include a plurality of local data networks (local DNs).

Edge application server EAS:
The EAS is an application deployed in the edge data network. The edge application may also be referred to as an "application instance", and is specifically an instance (instance), of a server application (for example, social media software, augmented reality (augmented reality, AR), or virtual reality (virtual reality, VR)), deployed and run in the EDN. One application may deploy one or more EASs in one or more EDNs. The EASs deployed and run in different EDNs may be considered as different EASs of one application. The EASs may share a domain name or use domain names different from those of applications deployed on the cloud. The domain name may be a fully qualified domain name (fully qualified domain name, FQDN), and may use an anycast IP address, or may use different IP addresses.

It may be understood that the EAS may also be referred to as an edge application (server), an application instance, an edge application instance, a multi-access edge computing (multi-access edge computing, MEC) application (server), an EAS function, or the like.

Edge enabler server EES:
The EES is deployed in the EDN, and may provide some enabling capabilities for application instances deployed in the EDN, to better support application deployment in MEC, and also support registration of edge applications, authentication and authorization of UE, provide IP address information of an application instance for the LTE, and so on. The EES may further support obtaining an identifier and IP address information of the application instance, and further send the identifier and the IP address information of the application instance to an edge data network configuration server. Generally, the EAS is registered with one EES, or information about one EAS is configured on one EES by using a management system. The EES is referred to as an EES associated with the EAS. The EES controls/manages the EAS registered with/configured on the EES.

An edge network configuration server (edge data network configuration server, ECS) is responsible for EDN configuration, for example, providing EES information for the UE. The ECS may further directly provide the information about the application instance for the UE, and interact with a domain name server (domain name server, DNS) of the application to obtain the information about the application instance. The information about the application instance and the IP address information may be further obtained from other functional entities and stored.

LDNSR:
The LDNSR network element is configured to process a DNS message sent by the UE. After receiving the DNS message of the UE, the LDNSR requests location information of the UE from the SMF network element, that is, places the location information of the UE in an ECS field in DNS request message. The DNS server selects an application server closer to a location of the UE for the UE based on the ECS field.

NWDAF:
The NWDAF network element mainly collects performance data of each network function, including collecting information such as user service experience and an application instance state from an application side.

The following briefly describes terms related to this application.

Load state of the EAS:
The load state of the EAS may be a comprehensive representation of running states of various system resources of the EAS, and these resource running states include a central processing unit (central processing unit, CPU) usage state, a memory usage state, and an input/output (input/output, I/O) usage state, a quantity of connected users, a quantity of requested connections, a bandwidth, and the like. When these resource running states reach specific levels, the resources may fail to provide services for users or accept access of new users. In this case, it may be considered that the EAS is overloaded (overloaded).

It may be understood that load states of different EASs of a same application may be different, and different EASs of different applications may also be different. That is, the different applications may independently collect statistics on EAS load states corresponding to the different applications. For example, when an EAS for a first application is overloaded, an EAS for a second application may be in a normal state.

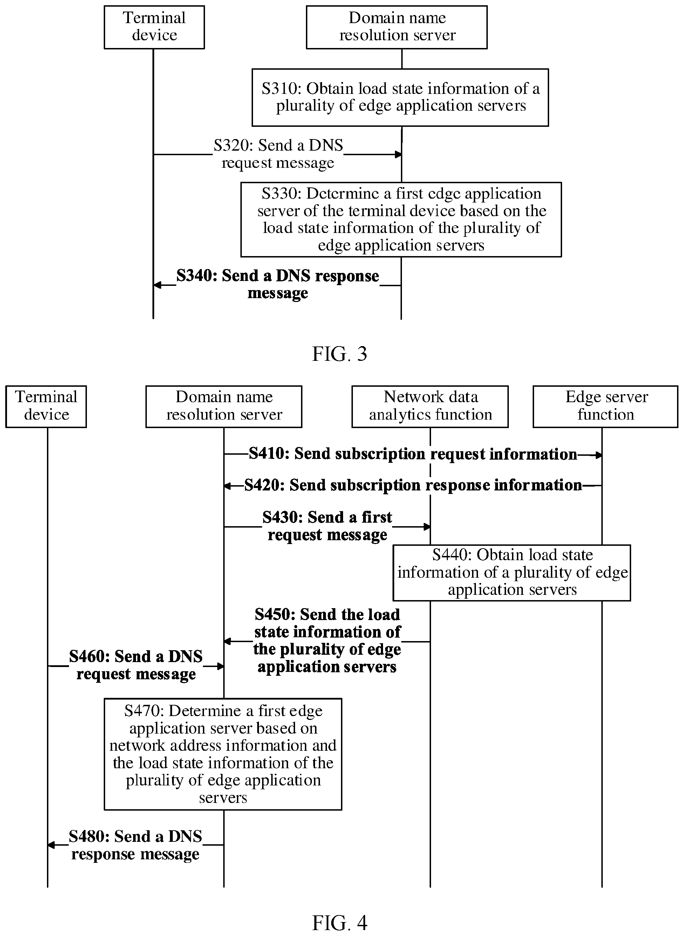

FIG. 3 is a schematic flowchart of a method for selecting an edge application server according to this application. The method includes the following steps.

S310: A domain name resolution server network element obtains load state information of a plurality of edge application servers.

Specifically, the LDNSR network element obtains the load state information of the plurality of edge application servers EASs. The load state information may be real-time analysis data, including load information of the EAS, user service experience, and the like. This is not limited in this embodiment of this application.

In a possible implementation, the LDNSR network element sends first request information to a network data analytics function network element, where the first request information is used to obtain the load state information of the plurality of edge application servers. Correspondingly, the network data analytics function network element collects the load state information of the plurality of edge application servers, and sends the load state information to the domain name resolution server network element.

In another possible implementation, the LDNSR network element receives the load state information of the plurality of edge application servers that is sent by the edge service function network element. It should be understood that the edge service function network element may be an edge enabler server EES function network element, or may be an edge network configuration server ECS function network element. This is not limited in this embodiment of this application.

S320: The domain name resolution server network element receives a domain name server DNS request message sent by a terminal device.

The terminal device sends the domain name server DNS request message to the LDNSR network element, where the DNS request message is used to request data network access identifier DNAI information of the plurality of edge application servers.

It should be noted that, the terminal device may directly send the DNS request message to the LDNSR network element, or may forward the DNS request message via another core network element. It should be understood that the core network element herein may be an SMF network element or a UPF network element. This is not limited in this embodiment of this application.

S330: The domain name resolution server network element determines a first edge application server of the terminal device based on the load state information of the plurality of edge application servers.

In a possible implementation, the LDNSR network element obtains the load state information of the plurality of edge application servers, and determines the first edge application server from the plurality of edge application servers based on the load state information. For example, the LDNSR network element skips selecting an overloaded edge application server from the plurality of edge application servers, but preferentially selects an edge application server with light load.

In another possible implementation, the LDNSR network element further obtains the DNAI information (network address information) of the plurality of edge application servers, and determines the first edge application server from the plurality of edge application servers based on the load state information and the DNAI information. For example, the LDNSR network element selects an edge application server with light load from a plurality of edge application servers that are close to each other. It should be noted that, according to this technical solution, the LDNSR network element can consider both a load state information factor and a delay factor, to select a more appropriate edge application server for the terminal device. In another embodiment of this application, when the load state information is considered to select the edge application server, the DNAI information may also be simultaneously or further considered to select the edge application server for the terminal device.

S340: The domain name resolution server network element sends DNS response information to the terminal device.

Specifically, the LDNSR generates the DNS response information. This may also be understood as that the LDNSR replaces a DNS server to generate the DNS response information, and sends a selected first EAS instance to the terminal device by using the DNS response message.

It should be noted that, the LDNSR network element may directly send the DNS response information to the terminal device, or may forward the DNS response information via another core network element. It should be understood that the core network element herein may be the SMF network element, or may be the user plane function UPF network element. This is not limited in this embodiment of this application.

It should further be noted that, in this application, the domain name resolution server network element may alternatively determine the first edge application server for the terminal device based on load state information of one edge application server. In other words, this embodiment of this application is not limited to "a plurality of edge application servers", or there may be one edge application server. This is not limited in this application.

According to the foregoing technical solution, the LDNSR network element can consider both the delay factor and the load state information factor, to select the more appropriate edge application server for the terminal.

FIG. 4 is a schematic flowchart of an embodiment according to this application, as shown in FIG. 4.

It may be understood that, unless otherwise specified, same terms in the embodiment shown in FIG. 4 and the embodiment shown in FIG. 3 have a same meaning. To avoid repetition, details are not described herein again.

S410: A domain name resolution server network element sends a subscription request message to an edge service function network element.

The edge service function network element may be an edge enabler server EES function network element, or may be an edge network configuration server ECS function network element. This is not limited in this embodiment of this application.

Specifically, the LDNSR network element sends the subscription request message to the edge service function network element. Correspondingly, the edge service function network element receives the subscription request message from the LDNSR network element, where the subscription request message is used to subscribe to online events of a plurality of edge application servers, and the online event may be understood as an online state of a server, or an online state change of a plurality of servers. It should be understood that the subscription request message carries information about identities (identities, IDs) of a plurality of EAS instances.

S420: The domain name resolution server network element receives subscription response information from the edge service function network element.

Specifically, the subscription request message includes ID information of the plurality of EAS instances, and each ID represents one type of EAS instance. The edge service function network element responds, based on an EAS instance ID, to the LDNSR network element with address information of an EAS instance corresponding to the ID. It should be understood that the address information includes information about an EAS instance identifier, DNAI information of the EAS instance, an EES address of the EAS instance, and the like. This is not limited in this embodiment of this application.

S430: The domain name resolution server network element sends first request information to a network data analytics function network element.

Specifically, the first request information is used to request load state information of the plurality of edge application servers. The LDNSR network element requests the load state information of the plurality of EASs from the network data analytics function NWDAF network element. It should be understood that the load state information may include load information of the EAS instance, or may include user service experience, or the like. This is not limited in this embodiment of this application.

It should be further understood that the first request information carries identifiers and/or EES addresses of the plurality of edge application servers. This is not limited in this embodiment of this application.

In a possible implementation, the first request information may further include a plurality of requested EAS instance identifiers. For example, if the LDNSR needs to obtain the load state information of the plurality of EASs, the LDNSR may include the instance identifiers of the plurality of EASs in a request message and send the request message to the NWDAF network element, or may send the instance identifiers to the NWDAF network element by using another message. It should be understood that this is not limited in this embodiment of this application.

S440: The network data analytics function network element obtains the load state information of the plurality of EAS edge application servers via the edge service function network element.

Specifically, if the plurality of EASs are deployed on a plurality of EES s, the NWDAF network element needs to collect the load state information of the EAS instances from the EESs on which the EASs are deployed. The NWDAF network element collects, based on the EES addresses of the plurality of EASs, load state information of application instances corresponding to EAS application IDs from the EES network element. Correspondingly, the EES network element sends the collected load state information of the EAS instances to the NWDAF network element.

For example, EASs with IDs 1 and 2 are deployed on an EES 1, and EASs with IDs 3 and 4 are deployed on an EES 2. In this case, the NWDAF network element collects load state information of the EAS instances with the IDs 1 and 2 from the EES 1 based on an address of the EES 1, and correspondingly collects load state information of the EAS instances with the IDs 3 and 4 from the EES 2 based on an address of the EES 2.

It should be understood that the load state information may be load information of an EAS instance, or may be user service experience. It should be understood that this is not limited in this application.

S450: The NWDAF network element sends the load state information of the plurality of edge application servers to the LDNSR network element.

It should be understood that the load state information may include the load information of the EAS instance, the user service experience, or the like. This is not limited in this embodiment of this application.

S460: A terminal device sends a DNS request message to the LDNSR network element. Correspondingly, the LDNSR network element receives the DNS request message from the terminal device.

S470: The LDNSR network element determines a first edge application server based on network addresses and the load state information of the plurality of edge application servers.

Specifically, the LDNSR network element adds location information of the UE to an ECS field in the DNS request message to be sent by the UE, and the DNS server selects, for the UE based on the location information of the UE, a plurality of application servers close to the UE. The LDNSR network element determines, based on the obtained load state information of the EAS, an EAS with minimum load in the EASs closer to the UE as the first edge application server to be accessed by the UE.

S480: The LDNSR sends DNS response information to the terminal device.

Specifically, the LDNSR generates the DNS response information, and sends the determined first edge application server to the LTE by using the DNS response information. It should be noted that generating the response information by the LDNSR may be understood as replacing, by the LDNSR, a DNS server to generate the DNS response information.

According to the foregoing technical solution, the LDNSR network element can consider both a delay factor and a load state factor, to select a more appropriate edge application server for the terminal.

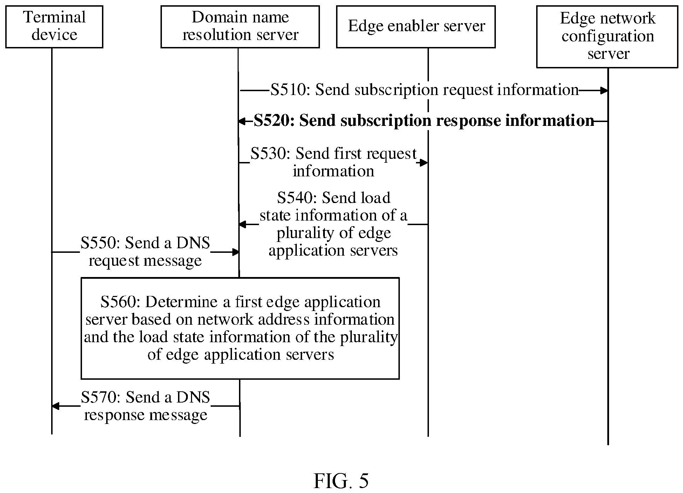

FIG. 5 is a schematic flowchart of another embodiment according to this application.

It may be understood that, unless otherwise specified, same terms in the embodiment shown in FIG. 5 and the embodiment shown in FIG. 3 have a same meaning. To avoid repetition, details are not described herein again.

S510: A domain name resolution server network element sends subscription request information to an edge network configuration server network element.

S520: The edge network configuration server network element sends subscription response information to an edge enabler server network element.

It should be noted that, corresponding operations are performed in steps S510 and S520 and the foregoing steps S410 and S420, and details are not described herein again.

S530: The domain name resolution server network element sends first request information to the edge enabler server network element.

Specifically, the first request information is used to request load state information of a plurality of edge application servers. The LDNSR network element requests the load state information of the plurality of EASs from the EES network element. It should be understood that the load state information may include load information of an EAS instance, user service experience, or the like. This is not limited in this embodiment of this application.

It should be further understood that the first request information carries identities and/or EES addresses of the plurality of edge application servers. This is not limited in this embodiment of this application.

In a possible implementation, the first request information may further include a plurality of requested EAS instance identifiers.

In another possible implementation, the first request information may further carry information about a reporting condition, for example, a periodic report or a reporting threshold. It should be understood that the reporting condition is not limited in this embodiment of this application. The periodic report may be understood as setting a specific time periodicity. When the EES network element receives the periodic report and the specified time periodicity is reached, the EES network element reports (sends) the requested load state information of the plurality of EASs to the LDNSR network element. The reporting threshold may be understood as setting a threshold. When the EES network element receives the reporting threshold and the specified threshold is reached, the EES network element reports (sends) the requested load state information of the plurality of EASs to the LDNSR network element.

S540: The edge enabler server network element sends the load state information of the plurality of edge application servers to the domain name resolution server network element.

The load state information may include the load information of the EAS instance, the user service experience, or the like. This is not limited in this embodiment of this application.

In another possible implementation, the EES network element may alternatively report the load state information of the plurality of edge application servers to the LDNSR network element.

For example, if the EES network element receives the information about the reporting condition in step S530, when the reporting condition is met, the EES reports the load state information of the plurality of edge application servers to the LDNSR network element.

Specifically, if the reporting condition received by the EES network element in step S530 is the periodic report, it may be understood that, assuming that time of the periodic report is set to 100s, the EES network element reports the load state information of the plurality of edge application servers to the LDNSR network element after the specified periodicity time of 100 s elapses.

If the reporting condition received by the EES network element in step S530 is the reporting threshold, the EES network element reports the load state information of the plurality of edge application servers to the LDNSR network element after the specified threshold is reached.

It should be understood that meeting the foregoing reporting condition may be understood as meeting at least one of the periodic report and the reporting threshold. In other words, the EES network element may also report the load state information to the LDNSR network element when both the periodic report condition and the reporting threshold condition are met.

It should be further understood that the reporting condition may alternatively include another possible specified reporting condition. This is not limited in this embodiment of this application.

In another possible implementation, if the EES network element does not receive the information about the reporting condition in step S530, in other words, the first request information does not carry the reporting condition, the EES network element directly sends the load state information of the edge application server to the LDNSR network element.

In another possible implementation, if the EES network element receives the reporting condition in step S530 but the reporting condition is not met, the EES network element skip reporting the load state information of the edge application server to the LDNSR network element.

S550: A terminal device sends a DNS request message. Correspondingly, the LDNSR network element receives the DNS request message from the terminal device.

S560: The LDNSR network element determines a first edge application server based on network address information and the load state information of the plurality of edge application servers.

S570: The LDNSR sends DNS response information.

It should be noted that, corresponding operations are performed in steps S550 to S570 and the foregoing steps S460 to S480. Details are not described herein again in this application.

According to the foregoing technical solution, the LDNSR network element can consider both a delay factor and a load state factor, to select an appropriate edge application server for the terminal.

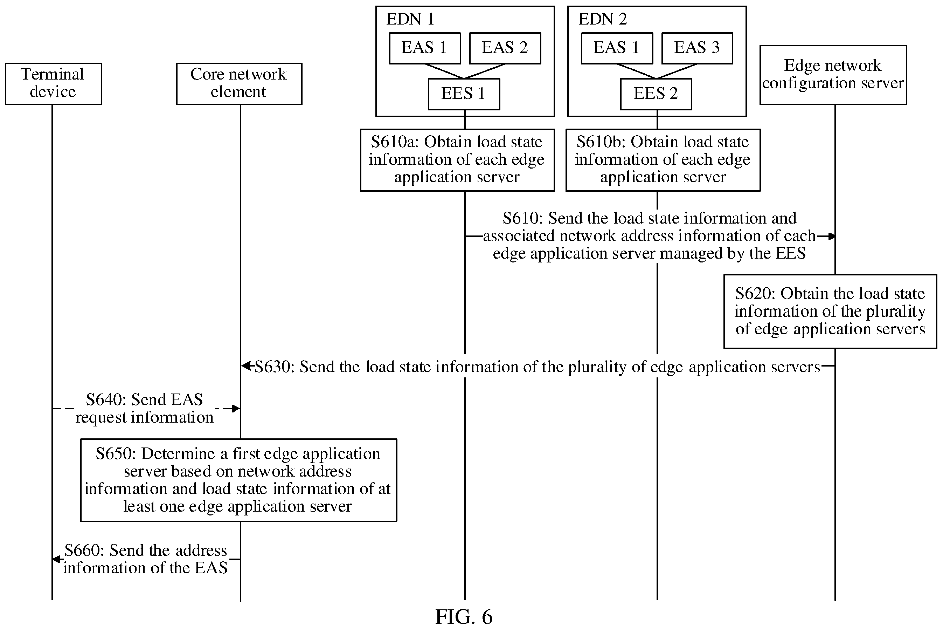

FIG. 6 is a schematic flowchart of another embodiment according to this application.

It may be understood that, unless otherwise specified, same terms in the embodiment shown in FIG. 6 and the embodiment shown in FIG. 3 have a same meaning. To avoid repetition, details are not described herein again.

As shown in FIG. 6, for ease of distinguishing, a plurality of EESs, EASs, and EDNs in this embodiment are numbered. It can be learned from the figure that an EES 1 mainly manages load state information of an EAS 1 and an EAS 2, and an EES 2 mainly manages load state information of an EAS 3 and an EAS 4. In addition, the EES 1 and the EAS 1 and the EAS 2 that are managed by the EES 1 are deployed in an EDN 1, and the EES 2 and the EAS 3 and EAS 4 that are managed by the EES 2 are deployed in an EDN 2.

S610: The edge enabler server network elements send, to an edge network configuration server network element, load state information of the edge application servers managed by the edge enabler server network elements and associated network address information.

Specifically, the EES network element obtains the load state information of each EAS edge application server in the EDN. The load state information may be a load state of a CPU, a graphics processing unit (graphics processing unit, GPU), a memory, or the like. This is not limited in this embodiment of this application.

For example, in S610a, the EES 1 obtains load state information of the EAS 1 and the EAS 2 in the EDN 1, and in S610b, the EES 2 obtains load state information of the EAS 1 and the EAS 3 in the EDN 2. It should be understood that a quantity of EASs deployed on the EES is merely an example for description. Correspondingly, a quantity of EDNs is also merely an example for description, and there may be one or more EDNs. This is not limited in this embodiment of this application.

In another possible implementation, the EAS may alternatively directly report the load state information of the EAS and DNAI information associated with the EAS to the ECS network element, that is, there is no need to send the load state information and the associated DNAI information to the ECS network element via the EES network element.

S620: The edge network configuration server network element obtains the load state information of the plurality of edge application servers.

S630: The edge network configuration server network element sends the load state information of the plurality of edge application servers and the DNAI information associated with the EAS to a core network element. Correspondingly, the core network element stores the foregoing information.

Specifically, the ECS network element may send the foregoing information to the core network element by enhancing an existing AF influence traffic routing mechanism (that is, an application actively triggers a service flow routing rule), or in another manner. This is not limited in this embodiment of this application.

It should be understood that the core network element may be an LDNSR network element, an SMF network element, a PCF network element, an NRF network element, a UPF network element, or the like. This is not limited in this embodiment of this application.

S640: A terminal device sends EAS address request information to the core network element, to obtain the address information of the plurality of edge application servers.

Specifically, the UE may send DNS request information to the core network element, or the UE may send service provisioning request information, or the UE may send EAS discovery request information, or the like. It should be understood that a specific message name is not limited in this application.

It should be understood that step S640 is an optional step, that is, the UE may not send the EAS address request information to the core network element.

S650: The core network element determines a first edge application server based on the network address information and the load state information of the plurality of edge application servers.

Specifically, the core network element determines, based on stored load state information of the plurality of EASs, a list of EASs to be accessed by the UE, or determines EESs corresponding to a plurality of EASs accessed by the UE. If a plurality of edge application servers requested by the UE are deployed in a plurality of EDNs, a 5GC network element determines, based on load state information of the plurality of EASs and associated DNAI information, a plurality of EASs that are close to the LTE, and determines an EAS with minimum load as an EAS that needs to be accessed by the UE.

S660: The core network element sends the address information of the EAS to the terminal device.

In a possible implementation, the core network element sends connection information of an EES corresponding to the determined EAS to the UE, or the core network element sends the address information of the EAS to the UE.

In another possible implementation, the core network element sends connection information of a plurality of EESs and load state information of a plurality of EASs requested in first request information to the UE, and the UE determines the first edge application server based on the load state information of the plurality of EASs and associated DNAI information.

According to the foregoing technical solution, the LDNSR network element can consider both a delay factor and a load state factor, to select an appropriate edge application server for the terminal.

Embodiments described in this specification may be independent solutions, or may be combined based on internal logic. All these solutions fall within the protection scope of this application.

It may be understood that, in the foregoing method embodiments, methods and operations implemented by each device may alternatively be implemented by a component (for example, a chip or a circuit) of the corresponding device.

The foregoing mainly describes the solutions provided in embodiments of this application from a perspective of interaction. It may be understood that, to implement the foregoing functions, each network element, for example, a transmitting end device or a receiving end device, includes a corresponding hardware structure and/or a corresponding software module for performing each function. A person skilled in the art should be aware that with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In embodiments of this application, functional modules of the transmitting end device or the receiving end device may be obtained through division based on the foregoing method examples. For example, each functional module may be obtained through division based on each function, or two or more functions may be integrated into one processing module. The foregoing integrated module may be implemented in a form of hardware, or may be implemented in a form of a software functional module. It should be noted that, the module division in embodiments of this application is an example, and is merely logical function division. There may be another division manner during actual implementation. An example in which each functional module is obtained through division based on each corresponding function is used below for description.

It should be understood that the specific examples in embodiments of this application are merely intended to help a person skilled in the art better understand embodiments of this application, but are not intended to limit the scope of embodiments of this application.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

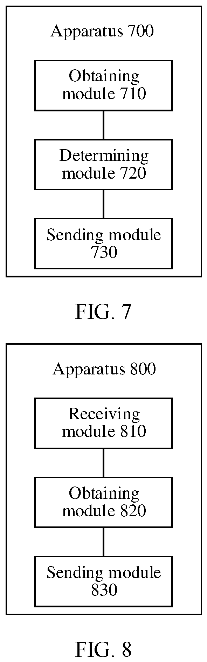

The foregoing describes in detail the methods provided in embodiments of this application with reference to FIG. 3 to FIG. 6. The following describes in detail apparatuses provided in embodiments of this application with reference to FIG. 7 to FIG. 10. It should be understood that descriptions of apparatus embodiments correspond to the descriptions of the method embodiments. Therefore, for content that is not described in detail, refer to the foregoing method embodiments. For brevity, details are not described herein again.

FIG. 7 is a schematic block diagram of an apparatus 700 of a domain name resolution server LDNSR according to an embodiment of this application.

It should be understood that the apparatus 700 may correspond to the LDNSR in the embodiment shown in FIG. 3, and may have any function of the LDNSR in the method. The apparatus 700 includes an obtaining module 710, a determining module 720, and a sending module 730.

The obtaining module 710 is configured to obtain load state information of a plurality of edge application servers.

The determining module 720 is configured to: when domain name server DNS request information is received from a terminal device, determine a first edge application server of the terminal device based on the load state information of the plurality of edge application servers, where the plurality of edge application servers include the first edge application server.

The sending module 730 is configured to send DNS response information to the terminal device, where the DNS response information includes identification information of the first edge application server.

In a possible implementation, the obtaining module 710 is specifically configured to:
send first request information to a network data analytics function network element, where the first request information is used to obtain the load state information of the plurality of edge application servers; and
receive the load state information of the plurality of edge application servers from the network data analytics function network element.

In another possible implementation, the obtaining module 710 is specifically configured to:
receive the load state information of the plurality of edge application servers from an edge service function network element.

In another possible implementation, data network access identifier DNAI information of the plurality of edge application servers is obtained.

The determining module 720 is further configured to:
determine the first edge application server based on the load state information of the plurality of edge application servers and the DNAI information of the plurality of edge application servers.

In another possible implementation, the obtaining module 710 is specifically configured to:
receive the DNAI information of the plurality of edge application servers from an edge service function network element.

In another possible implementation, the sending module 730 is further configured to:
send subscription request information, where the subscription request information is used to subscribe to online events of the plurality of edge application servers, and the subscription request information carries identification information of the plurality of edge application servers.

FIG. 8 is a schematic block diagram of an apparatus 800 of a network data analytics function network element NWDAF according to an embodiment of this application.

It should be understood that the apparatus 800 may correspond to the NWDAF in the embodiment shown in FIG. 3, and may have any function of the NWDAF in the method. The apparatus 800 includes a receiving module 810, an obtaining module 820, and a sending module 830.

The receiving module 810 is configured to receive first request information from a domain name resolution server network element, where the first request information is used to request load state information of a plurality of edge application servers.

The obtaining module 820 is configured to obtain the load state information of the plurality of edge application servers.

The sending module 830 is configured to send the load state information of the plurality of edge application servers to the domain name resolution server network element.

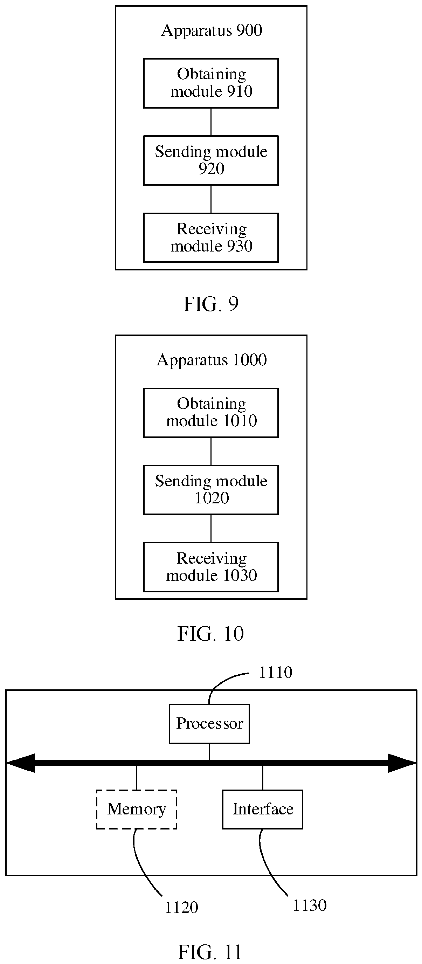

FIG. 9 is a schematic block diagram of an apparatus 900 of an edge network configuration server ECS according to an embodiment of this application.

It should be understood that the apparatus 900 may correspond to the ECS in the embodiments shown in FIG. 3 to FIG. 6, and may have any function of the ECS in the method. The apparatus 900 includes an obtaining module 910, a sending module 920, and a receiving module 930.

The obtaining module 910 is configured to obtain load state information of a plurality of edge application servers.

The sending module 920 is configured to send the load state information of the plurality of edge application servers.

In a possible implementation, the apparatus 900 further includes:
the receiving module 930, configured to receive a subscription request message, where the subscription request message is used to obtain data network access identifier DNAI information of the plurality of edge application servers.

In another possible implementation, the sending module 920 is configured to: send the DNAI information of the plurality of edge application servers.

In another possible implementation, the receiving module 930 is further configured to:
receive subscription request information, where the subscription request information is used to subscribe to online events of the plurality of edge application servers, and the subscription request information carries identification information of the plurality of edge application servers.

FIG. 10 is a schematic block diagram of an apparatus 1000 of an edge enabler server EES according to an embodiment of this application.

It should be understood that the apparatus 1000 may correspond to the EES in the embodiments shown in FIG. 3 to FIG. 6, and may have any function of the EES in the method. The apparatus 1000 includes an obtaining module 1010, a sending module 1020, and a receiving module 1030.

The obtaining module 1010 is configured to obtain load state information of a plurality of edge application servers.

The sending module 1020 is configured to send the load state information of the plurality of edge application servers.

In a possible implementation, the apparatus 1000 further includes:
the receiving module 1030, configured to receive first request information, where the first request information is used to request the load state information of the plurality of edge application servers.

It should be understood that division of the modules in the communication apparatus is merely logical function division. During actual implementation, all or some of the modules may be integrated into one physical entity or may be physically separated. In addition, all modules in the communication apparatus may be implemented in a form of software invoked by a processing element, or may be implemented in a form of hardware; or some modules may be implemented in a form of software invoked by a processing element, and some modules may be implemented in a form of hardware. For example, the modules may be separately disposed processing elements, or may be integrated into a chip of the communication apparatus for implementation. In addition, the modules may be stored in a memory in a form of a program, and are invoked by a processing element of the communication apparatus to perform functions of the modules. In addition, all or some of these modules may be integrated together, or may be implemented independently. The processing element described herein may also be referred to as a processor, and may be an integrated circuit having a signal processing capability. During implementation, steps in the foregoing methods or the foregoing modules may be implemented by using a hardware integrated logic circuit in a processor element, or may be implemented in a form of software invoked by the processing element.

In an example, a module in any one of the foregoing communication apparatuses may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the module in the communication apparatus may be implemented in a form of invoking a program by a processing element, the processing element may be a general-purpose processor, for example, a central processing unit (central processing unit, CPU) or another processor that can invoke a program. For another example, these modules may be integrated and implemented in a form of a system-on-a-chip (system-on-a-chip, SoC).

FIG. 11 is a schematic diagram of a communication apparatus according to an embodiment of this application. The communication apparatus is configured to implement an operation of the LDNSR, the NWDAF, the ECS, or the EES in the foregoing embodiments. As shown in FIG. 11, the communication apparatus includes a processor 1110 and an interface 1130. The processor 1110 is coupled to the interface 1130. The interface 1130 is configured to communicate with another device. The interface 1130 may be a transceiver or an input/output interface. The interface 1130 may be, for example, an interface circuit. Optionally, the communication apparatus further includes a memory 1120, configured to store instructions to be executed by the processor 1110, or store input data required by the processor 1110 to run instructions, or store data generated after the processor 1110 runs instructions.

The method performed by the LDNSR, the NWDAF, the ECS, or the EES in the foregoing embodiments may be implemented by the processor 1110 invoking a program stored in a memory (where the memory may be the memory 1120 in the LDNSR, the NWDAF, the ECS, or the EES, or may be an external memory). That is, the LDNSR, the NWDAF, the ECS, or the EES may include the processor 1110. The processor 1110 invokes the program in the memory to perform the method performed by the LDNSR, the NWDAF, the ECS, or the EES in the foregoing method embodiments. The processor herein may be an integrated circuit having a signal processing capability, for example, a CPU. The LDNSR, the NWDAF, the ECS, or the EES may be implemented by one or more integrated circuits configured to implement the foregoing method, for example, one or more ASICs, one or more microprocessor DSPs, one or more FPGAs, or a combination of at least two of these integrated circuit forms. Alternatively, the foregoing implementations may be combined.

Specifically, a function/an implementation process of each module in FIG. 7 to FIG. 10 may be implemented by the processor 1110 in the communication apparatus 1100 shown in FIG. 11 by invoking computer executable instructions stored in the memory 1120. Alternatively, a function/an implementation process of the determining module in FIG. 7 to FIG. 10 may be implemented by the processor 1110 in the communication apparatus 1000 shown in FIG. 11 by invoking computer executable instructions stored in the memory 1120, and a function/an implementation process of the receiving module or the sending module in FIG. 7 to FIG. 10 may be implemented through the interface 1130 in the communication apparatus 1100 shown in FIG. 11.

It should be understood that the processing unit in the foregoing apparatus includes the processor. The processor is coupled to the memory. The memory is configured to store a computer program or instructions and/or data. The processor is configured to execute the computer program or the instructions and/or the data stored in the memory, to perform the method in the foregoing method embodiments.

It should be further understood that division of units in the apparatus is merely logical function division. During actual implementation, all or some of the units may be integrated into one physical entity or may be physically separated. In addition, all units in the apparatus may be implemented in a form of software invoked by a processing element, or may be implemented in a form of hardware; or some units may be implemented in a form of invoked by software by a processing element, and some units may be implemented in a form of hardware. For example, the units may be separately disposed processing elements, or may be integrated into a chip of the apparatus for implementation. In addition, the units may be stored in a memory in a form of a program, and are invoked by a processing element of the apparatus to perform functions of the units. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in a form of software invoked by the processing element.

An embodiment of this application further provides a communications system. The communications system includes: the foregoing domain name resolution server network element, the foregoing network data analytics function network element, the foregoing edge network configuration server network element, and the foregoing edge enabler server network element.

An embodiment of this application further provides a computer-readable medium, configured to store computer program code. A computer program includes instructions used to perform the communication method in embodiments of this application in the foregoing methods. The readable medium may be a read-only memory (read-only memory, ROM) or a random access memory (random access memory, RAM). This is not limited in this embodiment of this application.

This application further provides a computer program product. The computer program product includes instructions. When the instructions are executed, a domain name resolution server network element, a network data analytics function network element, an edge network configuration server network element, and an edge enabler server network element are enabled to perform operations corresponding to the domain name resolution server network element, the network data analytics function network element, the edge network configuration server network element, and the edge enabler server network element in the foregoing methods.

An embodiment of this application further provides a system chip. The system chip includes a processing unit and a communications unit. The processing unit may be, for example, a processor. The communications unit may be, for example, an input/output interface, a pin, or a circuit. The processing unit may execute computer instructions, to enable the chip in the communication apparatus to perform any method for selecting an edge application server provided in embodiments of this application.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM or another type of static storage device that can store static information and instructions, or a RAM. Any processor mentioned above may be a CPU, a microprocessor, an ASIC, or one or more integrated circuits used to control program execution of the feedback information transmission method. The processing unit and the storage unit may be decoupled, are separately disposed on different physical devices, and are connected in a wired or wireless manner to implement functions of the processing unit and the storage unit, to support the system chip in implementing various functions in the foregoing embodiments. Alternatively, the processing unit and the memory may be coupled to a same device.

It may be understood that the memory in embodiments of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (where the computer device may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for selecting an edge application server, wherein the method is performed by a domain name resolution server network element, and comprises:
obtaining load state information of a plurality of edge application servers;
when domain name server DNS request information is received from a terminal device, determining a first edge application server of the terminal device based on the load state information of the plurality of edge application servers, wherein the plurality of edge application servers comprise the first edge application server; and
sending DNS response information to the terminal device, wherein the DNS response information comprises identification information of the first edge application server.

2. The method according to claim 1, wherein the obtaining load state information of a plurality of edge application servers comprises:
sending first request information to a network data analytics function network element, wherein the first request information is used to obtain the load state information of the plurality of edge application servers; and
receiving the load state information of the plurality of edge application servers from the network data analytics function network element.

3. The method according to claim 1, wherein the obtaining load state information of a plurality of edge application servers comprises:
receiving the load state information of the plurality of edge application servers from an edge service function network element.

4. The method according to claim 1, wherein
data network access identifier DNAI information of the plurality of edge application servers is obtained; and
the determining a first edge application server of the terminal device based on the load state information of the plurality of edge application servers further comprises:
determining the first edge application server based on the load state information of the plurality of edge application servers and the DNAI information of the plurality of edge application servers.

5. The method according to claim 4, wherein that obtaining data network access identifier DNAI information of the plurality of edge application servers comprises:
receiving the DNAI information of the plurality of edge application servers from an edge service function network element.

6. The method according to any one of claims 1 to 5, wherein the method further comprises:
sending subscription request information, wherein the subscription request information is used to subscribe to online events of the plurality of edge application servers, and the subscription request information carries identification information of the plurality of edge application servers.

7. A method for selecting an edge application server, wherein the method is performed by a network data analytics function network element, and comprises:
receiving first request information from a domain name resolution server network element, wherein the first request information is used to request load state information of a plurality of edge application servers;
obtaining the load state information of the plurality of edge application servers; and
sending the load state information of the plurality of edge application servers to the domain name resolution server network element.

8. A method for selecting an edge application server, wherein the method is performed by an edge network configuration server network element, and comprises:
obtaining load state information of a plurality of edge application servers; and
sending the load state information of the plurality of edge application servers.

9. The method according to claim 8, further comprising:
receiving a subscription request message, wherein the subscription request message is used to obtain data network access identifier DNAI information of the plurality of edge application servers.

10. The method according to claim 8 or 9, comprising:
sending the DNAI information of the plurality of edge application servers.

11. The method according to any one of claims 8 to 10, further comprising:
receiving subscription request information, wherein the subscription request information is used to subscribe to online events of a plurality of edge application servers, and the subscription request information carries identification information of the plurality of edge application servers.

12. A method for selecting an edge application server, wherein the method is performed by an edge enabler server network element, and comprises:
obtaining load state information of a plurality of edge application servers; and
sending the load state information of the plurality of edge application servers.

13. The method according to claim 12, comprising:
receiving first request information, wherein the first request information is used to request the load state information of the plurality of edge application servers.

14. A domain name resolution server network element, comprising:
an obtaining module, configured to obtain load state information of a plurality of edge application servers;
a determining module, configured to: when domain name server DNS request information is received from a terminal device, determine a first edge application server of the terminal device based on the load state information of the plurality of edge application servers, wherein the plurality of edge application servers comprise the first edge application server; and
a sending module, configured to send DNS response information to the terminal device, wherein the DNS response information comprises identification information of the first edge application server.

15. The domain name resolution server network element according to claim 14, wherein the obtaining module is specifically configured to:
send first request information to a network data analytics function network element, wherein the first request information is used to obtain the load state information of the plurality of edge application servers; and
receive the load state information of the plurality of edge application servers from the network data analytics function network element.

16. The domain name resolution server network element according to claim 14, wherein the obtaining module is specifically configured to:
receive the load state information of the plurality of edge application servers from an edge service function network element.

17. The domain name resolution server network element according to claim 14, wherein
data network access identifier DNAI information of the plurality of edge application servers is obtained; and
the determining module is further configured to:
determine the first edge application server based on the load state information of the plurality of edge application servers and the DNAI information of the plurality of edge application servers.

18. The domain name resolution server network element according to claim 17, wherein the obtaining module is specifically configured to:
receive the DNAI information of the plurality of edge application servers from an edge service function network element.

19. The domain name resolution server network element according to any one of claims 14 to 18, wherein the sending module is further configured to:
send subscription request information, wherein the subscription request information is used to subscribe to online events of the plurality of edge application servers, and the subscription request information carries identification information of the plurality of edge application servers.

20. A network data analytics function network element, comprising:
a receiving module, configured to receive first request information from a domain name resolution server network element, wherein the first request information is used to request load state information of a plurality of edge application servers;
an obtaining module, configured to obtain the load state information of the plurality of edge application servers; and
a sending module, configured to send the load state information of the plurality of edge application servers to the domain name resolution server network element.

21. An edge network configuration server network element, comprising:
an obtaining module, configured to obtain load state information of a plurality of edge application servers; and
a sending module, configured to send the load state information of the plurality of edge application servers.

22. The edge network configuration server network element according to claim 21, further comprising:
a receiving module, configured to receive a subscription request message, wherein the subscription request message is used to obtain data network access identifier DNAI information of the plurality of edge application servers.

23. The edge network configuration server network element according to claim 21 or 22, wherein the sending module is configured to:
send the DNAI information of the plurality of edge application servers.

24. The edge network configuration server network element according to any one of claims 21 to 23, wherein the receiving module is further configured to:
receive subscription request information, wherein the subscription request information is used to subscribe to online events of the plurality of edge application servers, and the subscription request information carries identification information of the plurality of edge application servers.

25. An edge enabler server network element, comprising:
an obtaining module, configured to obtain load state information of a plurality of edge application servers; and
a sending module, configured to send the load state information of the plurality of edge application servers.

26. The edge enabler server network element according to claim 25, comprising:
a receiving module, configured to receive first request information, wherein the first request information is used to request the load state information of the plurality of edge application servers.

27. An edge application server selection apparatus, comprising a domain name resolution server network element, a network data analytics function network element, an edge network configuration server network element, and an edge enabler server network element, wherein
the domain name resolution server network element is configured to perform the method according to any one of claims 1 to 6; or
the network data analytics function network element is configured to perform the method according to claim 7; or
the edge network configuration server network element is configured to perform the method according to any one of claims 8 to 11; or
the edge enabler server network element is configured to perform the method according to claim 12 or 13.

28. A computer-readable storage medium, wherein the computer storage medium stores program instructions; and when the instructions are executed, a domain name resolution server network element is enabled to perform the method according to any one of claims 1 to 6; or
when the instructions are executed, a network data analytics function network element is enabled to perform the method according to claim 7; or
when the instructions are executed, an edge network configuration server is enabled to perform the method according to any one of claims 8 to 11; and or
when the instructions are executed, an edge enabler server network element is enabled to perform the method according to claim 12 or 13.

29. A chip system, comprising: at least one processor, wherein the at least one processor is configured to execute stored instructions, to enable a domain name resolution server network element to perform the method according to any one of claims 1 to 6; or
the at least one processor is configured to execute stored instructions, to enable a network data analytics function network element to perform the method according to claim 7; or
the at least one processor is configured to execute stored instructions, to enable an edge network configuration server network element to perform the method according to any one of claims 8 to 11; or
the at least one processor is configured to execute stored instructions, to enable an edge enabler server network element to perform the method according to claim 12 or 13.

30. A system, wherein the system comprises:
the domain name resolution server network element according to any one of claims 14 to 19; and/or
the network data analytics function network element according to claim 20; and/or
the edge network configuration server network element according to any one of claims 21 to 24; and/or
the edge enabler server network element according to claim 25 or 26.
